# FASCICULE DE BREVET EUROPEEN

(11) **EP 2 802 495 B1**
(45) Date de publication et mention de la délivrance du brevet: **14.06.2017**
(21) Numéro de dépôt: 13701859.4
(22) Date de dépôt: 10.01.2013
(51) Int. Cl.: B60W 10/02, B60W 20/40, B60W 10/08, B60W 20/00, B60K 6/48, B60W 30/18

(54) **PROCEDE DE COUPURE D'UN MOTEUR ELECTRIQUE D'UN VEHICULE HYBRIDE**
VERFAHREN ZUM ABSCHALTEN EINES ELEKTROMOTORS EINES HYBRIDFAHRZEUGS
METHOD FOR CUTTING OFF AN ELECTRIC MOTOR OF A HYBRID VEHICLE

(30) Priorité: 13.01.2012 FR 1250338
(43) Date de publication de la demande: 19.11.2014
(73) Titulaire: Valeo Systèmes de Contrôle Moteur, 95800 Cergy (FR)
(72) Inventeur: FOURNIGAULT, Damien, 95300 Pontoise (FR); LELARGE, Anthony, 92100 Boulogne-Bilancourt (FR); COUSIN, Frédéric, 95210 Saint Gratien (FR); BITAULD, Mathieu, 92300 Levallois-perret (FR); VITIELLO, Nicolas, 92150 Suresnes (FR)
(74) Mandataire: Garcia, Christine
(86) Numéro de dépôt international: PCT/FR2013/050057
(87) Numéro de publication internationale: WO 2013/104868

(56) Documents cités:
- EP-A1- 2 308 734
- DE-A1- 10 015 845
- DE-A1- 19 631 123
- US-A1- 2004 030 470
- US-A1- 2010 250 037

## Description

La présente invention concerne le démarrage d'un véhicule hybride comprenant un moteur électrique et un moteur thermique, notamment un moteur à combustion interne, à essence ou diesel.

Au sens de l'invention, le véhicule hybride démarre lorsque le couple moteur permet de déplacer le véhicule, ce qui est encore connu par l'homme du métier sous le terme de « décollage » du véhicule. EP 2 308 734 A1 divulgue un procédé de coupure d'un moteur électrique d'un véhicule hybride comprenant en outre un moteur thermique, dans lequel:
- on compare la valeur d'une grandeur représentative de la vitesse du moteur électrique délivrée par un capteur avec une valeur seuil prédéfinie, et
- on coupe le moteur électrique lorsque la valeur délivrée par le capteur est supérieure à ladite valeur seuil. Quatre étapes existent avant le décollage d'un véhicule uniquement équipé d'un moteur thermique: une étape de démarrage du moteur thermique, une étape de ralenti pendant laquelle la vitesse du moteur thermique est régulée autour d'une valeur de consigne donnée, cette valeur de consigne pouvant être prédéfinie par l'unité de contrôle moteur, une étape de patinage lors de laquelle on accouple à l'aide du système d'embrayage de la chaîne de traction du véhicule le moteur thermique et la boîte de vitesse et une étape lors de laquelle le moteur thermique entraîne les roues motrices, permettant le décollage du véhicule. Ces étapes, et notamment l'étape de ralenti pendant laquelle le moteur thermique se trouve en dehors de points de fonctionnement optimaux en termes de consommation de carburant, sont coûteuses en carburant.

Avec les véhicules hybrides existant ayant un moteur électrique de puissance limitée, on utilise ce dernier lorsque le véhicule roule déjà, afin de fournir un couple supplémentaire en plus du couple fourni par le moteur thermique.

Avec les véhicules hybrides existant ayant un moteur électrique de puissance plus importante, on peut démarrer le véhicule à l'aide de ce seul moteur électrique, ce moteur électrique étant directement relié aux roues motrices autrement que via un système d'embrayage et une boîte de vitesses. Un tel moteur électrique est cependant coûteux.

Il existe un besoin pour pouvoir utiliser un moteur électrique de puissance modérée lors du démarrage ou décollage du véhicule afin de réduire autant que possible l'utilisation du moteur thermique, dans un souci économique et environnemental.

L'invention a pour but de répondre à ce besoin et elle y parvient, selon l'un de ses aspects, à l'aide d'un procédé de démarrage d'un véhicule hybride comprenant :
- un moteur électrique,
- un moteur thermique, et
- un système d'embrayage accouplant sélectivement au moins le moteur électrique avec des roues motrices du véhicule,
procédé comportant les étapes selon lesquelles :
- (i) on démarre le moteur électrique,
- (ii) on régule la vitesse du moteur électrique autour d'au moins une valeur de consigne, et
- (iii) on accouple à l'aide du système d'embrayage le moteur électrique et lesdites roues motrices du véhicule, de manière à ce que le moteur électrique entraîne le véhicule.

Selon le procédé ci-dessus, on effectue avec le moteur électrique les étapes du démarrage ou décollage du véhicule qui sont effectuées à l'aide d'un moteur thermique dans un véhicule classique.

Le système d'embrayage peut accoupler directement le moteur électrique avec les roues motrices. En variante, le système d'embrayage peut accoupler le moteur électrique avec une boîte de vitesses reliée aux roues motrices.

Les étapes ci-dessus peuvent être effectuées exclusivement à l'aide du moteur électrique ou en utilisant à la fois le moteur électrique et le moteur thermique. On peut ainsi supprimer ou réduire les injections de carburant dans le moteur thermique lors du décollage du véhicule.

Dans le cas où seul le moteur électrique est utilisé, la vitesse du véhicule à son démarrage est limitée au dimensionnement du moteur électrique. L'emploi combiné du moteur thermique et du moteur électrique peut permettre d'augmenter la vitesse de démarrage du véhicule ou de remédier à un niveau de charge insuffisant d'une unité de stockage d'énergie électrique alimentant le moteur électrique.

En outre, le moteur thermique n'étant pas ou moins utilisé lors de l'étape (ii) de régulation, le confort de l'utilisateur peut être amélioré par le couple continu fourni par le moteur électrique.

Le moteur électrique peut présenter une puissance nominale de quelques kW, par exemple de l'ordre de 8 kW.

L'unité de stockage d'énergie électrique alimentant le moteur électrique peut être embarquée sur le véhicule et, lors de la mise en oeuvre du procédé, la sollicitation du moteur électrique peut être adaptée en temps réel au niveau de charge de cette unité de stockage d'énergie électrique. Par exemple, lorsque le procédé est initié à l'aide du seul moteur électrique, le moteur thermique peut être démarré au cours de l'une des étapes ci-dessus s'il s'avère que l'unité de stockage d'énergie n'est pas suffisamment chargée pour assurer le décollage du véhicule à l'aide du seul moteur électrique

L'étape (i) de démarrage du moteur électrique peut résulter d'un ordre donné par l'utilisateur du véhicule, notamment par l'intermédiaire d'une clef de contact ou par la pédale d'embrayage, par exemple dans le cas d'un système de type « stop and start ». Dans d'autres exemples, un appui sur la pédale d'accélération et/ou la pédale de frein peut permettre le déclenchement de l'étape (i). En variante encore, l'étape (i) est déclenchée en fonction de la position relative de l'une de la pédale de frein, de la pédale d'embrayage et de la pédale d'accélération par rapport à une autre de la pédale de frein, de la pédale d'embrayage et de la pédale d'accélération.

Lors de l'étape (ii) de régulation, la vitesse du moteur électrique peut être commandée de manière à ce qu'elle soit sensiblement égale à la valeur de consigne. Cette étape est encore appelée « étape de ralenti » et peut être réalisée par un asservissement effectué par un calculateur de supervision ou par l'unité de contrôle moteur du véhicule (ECU en anglais). En variante, cet asservissement peut être réalisé par l'électronique de commande du moteur électrique, cette dernière recevant de l'utilisateur, notamment via une pédale, ou d'une autre unité du véhicule une consigne de vitesse à appliquer.

La vitesse de consigne peut être prédéfinie, par exemple par un logiciel embarqué sur le véhicule, ou être déterminée en temps réel en réponse à une action de l'utilisateur du véhicule.

Le véhicule n'est pas entraîné par le moteur électrique lors de cette étape (ii). Dans ce but, et de façon non limitative:
- le système d'embrayage accouple ledit moteur et une boîte de vitesses interposée entre le système d'embrayage et les roues motrices et dont aucun rapport n'est engagé, ou
- un rapport de la boîte de vitesse est engagé et le système d'embrayage est en position désaccouplée, ou
- aucune boîte de vitesses n'est interposée entre le système d'embrayage et les roues motrices et le système d'embrayage est en position désaccouplée.

La valeur de consigne de l'étape (ii) appliquée à la vitesse du moteur électrique peut permettre l'entraînement par le moteur électrique du véhicule lors de l'étape (iii).

Dans un exemple de mise en oeuvre du procédé selon l'invention, l'étape (ii) consiste à réguler la valeur de la vitesse du moteur électrique autour d'une seule valeur de consigne.

Dans un autre exemple de mise en oeuvre du procédé selon l'invention, lors de l'étape (ii), la valeur de la vitesse du moteur électrique est successivement régulée autour d'au moins deux, notamment exactement deux, valeurs de consigne successives, cette régulation pouvant alors être effectuée par paliers.

Lorsque le véhicule comporte une boîte de vitesses, la vitesse du moteur électrique peut d'abord être régulée autour d'une première valeur de consigne correspondant au cas où aucun rapport de la boîte de vitesses n'est engagé, ce cas étant encore appelé « point mort ». Cette première valeur de consigne peut être choisie de manière à minimiser la consommation d'énergie électrique.

La vitesse du moteur électrique peut ensuite être régulée autour d'une deuxième valeur de consigne correspondant au cas où un rapport de la boîte de vitesses est engagé.

La deuxième valeur de consigne est notamment supérieure à la première valeur de consigne. La première valeur de consigne, ramenée au vilebrequin du moteur thermique, est par exemple comprise entre 400 et 500 tr/min tandis que la deuxième valeur de consigne, ramenée au vilebrequin du moteur thermique, est par exemple comprise entre 600 et 700 tr/min.

De manière générale, que cette étape (ii) de régulation de la vitesse du moteur électrique soit effectuée à l'aide d'une ou plusieurs valeurs de consigne, cette ou ces valeurs de consigne, ramenées au vilebrequin du moteur thermique, peuvent être comprises entre 400 et 700 tr/min.

Ces valeurs de consigne peuvent être inférieures à la valeur de consigne utilisée pour réguler la vitesse d'un moteur thermique lors de l'étape (ii), ce qui s'explique par le fait que le moteur thermique doit, pendant l'étape (ii), avoir un régime assurant une bonne combustion du carburant, une telle contrainte n'existant plus avec un moteur électrique. Du fait de la ou des basses valeurs de consigne utilisées pour la régulation de la vitesse du moteur électrique, la consommation d'énergie électrique par ce moteur est réduite, ce qui permet d'allonger la durée pendant laquelle le procédé peut être mis en oeuvre exclusivement à l'aide du moteur électrique. Ce fonctionnement du moteur électrique permet également de réduire les bruits d'aspiration dans la ligne d'admission du moteur thermique.

En variante, la ou les valeurs de consigne utilisées pour réguler la vitesse du moteur électrique lors de l'étape (ii) peuvent être similaires à celle utilisée dans le cas classique où les étapes (i) à (iii) sont effectuées uniquement à l'aide d'un moteur thermique.

Lors de l'étape (iii), encore appelée étape de patinage, au moins une grandeur mécanique du moteur électrique, notamment son couple et/ou sa vitesse, peut être contrôlée en fonction de consignes appliquées en temps réel par l'utilisateur du véhicule. Cette régulation est par exemple effectuée en activant une structure couple implémentée dans l'unité de contrôle moteur.

En variante, lors de l'étape (iii) de patinage, la ou lesdites grandeurs mécaniques sont contrôlées pour appliquer des consignes de vitesse prédéfinies, par exemple par l'unité de contrôle moteur.

Lors du décollage du véhicule, la régulation du couple fourni par le moteur électrique et/ou de la vitesse du moteur électrique en fonction de consignes prédéfinies ou en fonction de consignes appliquées en temps réel par l'utilisateur du véhicule décrites ci-dessus peut être mise en oeuvre.

La régulation du moteur électrique mise en oeuvre dans le cadre du procédé peut varier. Cette régulation de la vitesse du moteur électrique sera ainsi différente selon que l'on cherche ou non à démarrer le véhicule uniquement à l'aide du moteur électrique. La régulation du couple fourni par le moteur électrique peut par ailleurs varier selon que l'on veut ou non que les consignes de vitesse ou de couple proviennent de l'utilisateur du véhicule ou soient prédéfinies, par exemple par l'unité de contrôle moteur.

Le procédé ci-dessus peut être mis en oeuvre dans différentes architectures de chaînes de traction de véhicules hybrides. Dans ces architectures, le moteur électrique peut être monté sur la face avant du groupe motopropulseur du véhicule.

La boîte de vitesses peut ou non être interposée entre le moteur électrique et les roues motrices.

Dans un exemple d'architecture de la chaîne de traction, le moteur électrique est relié au vilebrequin du moteur thermique, le système d'embrayage étant interposé entre le moteur thermique et la boîte de vitesses du véhicule. Dans cet exemple, le système d'embrayage accouple ainsi l'ensemble formé par le moteur thermique et le moteur électrique à la boîte de vitesses, cette dernière étant reliée aux roues motrices du véhicule.

Le moteur électrique peut être relié à demeure au vilebrequin, par exemple par l'intermédiaire d'une courroie ou de tout autre moyen de transmission. En variante, le moteur électrique peut être relié au vilebrequin par un système de couplage pouvant être activé ou désactivé, par exemple un système de couplage de type crabot.

Dans cet exemple d'architecture, le moteur électrique est solidaire, en permanence ou non, du vilebrequin du moteur thermique.

Dans d'autres exemples d'architecture de la chaîne de traction, le moteur thermique et le moteur électrique sont montés en parallèle dans la chaîne de traction. Le système d'embrayage mentionné précédemment est par exemple un premier système d'embrayage disposé de manière à accoupler sélectivement le moteur électrique et le moteur thermique avec la boîte de vitesse et le véhicule comprend un deuxième système d'embrayage disposé entre le premier système d'embrayage et le moteur thermique. Ce deuxième système d'embrayage est disposé en aval de l'embranchement entre la branche de la chaîne de traction comprenant le moteur électrique et la branche de la chaîne de traction comprenant le moteur thermique.

Dans une autre architecture dans laquelle le moteur thermique et le moteur électrique sont montés en parallèle, le système d'embrayage mentionné précédemment est un premier système d'embrayage disposé de manière à accoupler sélectivement uniquement le moteur électrique avec les roues motrices et le véhicule comprend un deuxième système d'embrayage disposé de manière à accoupler sélectivement uniquement le moteur thermique et la boîte de vitesses. Dans cet exemple d'architecture, le premier système d'embrayage est intégré à la branche de la chaîne de traction comprenant le moteur électrique et le deuxième système d'embrayage est intégré à la branche de la chaîne de traction comprenant le moteur thermique et la boîte de vitesses. Selon cet exemple, le moteur électrique est relié aux roues motrices sans l'intermédiaire d'une boîte de vitesses.

Indépendamment ou en combinaison de ce qui précède, l'invention a encore pour objet, selon un autre de ses aspects, un procédé de gestion de la vitesse d'un véhicule hybride comprenant :
- un moteur électrique,
- un moteur thermique, et
- un système d'embrayage accouplant sélectivement au moins le moteur électrique avec des roues motrices du véhicule,
procédé dans lequel :
- on détecte que le véhicule n'est pas sollicité en accélération, et
- on maintient, en utilisant uniquement le moteur électrique, la vitesse du véhicule autour d'au moins une valeur de consigne donnée.

Le procédé ci-dessus permet de gérer la vitesse du véhicule lors d'une phase communément appelée « phase de ralenti ». Il peut s'agir aussi bien de l'étape (ii) de ralenti d'un procédé de démarrage de véhicule hybride similaire ou non à celui décrit ci-dessus que d'une phase dite de « ralenti entraîné», lors de laquelle le véhicule se déplace mais aucune consigne d'accélération n'est exercée. Lorsque le procédé de gestion ci-dessus est mis en oeuvre alors que le véhicule roule, le système d'embrayage peut accoupler le moteur électrique avec les roues motrices.

Le procédé de gestion ci-dessus peut ainsi permettre que, lors d'un ralenti, notamment un ralenti entraîné, la consommation du moteur thermique soit nulle sans que cela n'affecte le comportement du véhicule lorsqu'une consigne d'accélération est de nouveau exercée. On remédie ainsi aux inconvénients de l'art antérieur en termes de consommation importante de carburant lors d'un ralenti, notamment d'un ralenti entraîné.

Les caractéristiques exposées en rapport avec l'étape (ii) de procédé de démarrage du véhicule ci-dessus, et notamment la régulation de la vitesse du moteur électrique par palier(s) s'appliquent au procédé de gestion ci-dessus.

La vitesse du moteur électrique peut être régulée à l'aide d'une ou plusieurs valeurs de consigne qui, lorsqu'elles sont ramenées au vilebrequin du moteur thermique, sont du même ordre de grandeur que la ou les valeurs de consigne ramenées au vilebrequin du moteur thermique et utilisées pour la régulation de la vitesse d'un moteur thermique lors d'un ralenti, notamment d'un ralenti entraîné. Une valeur de consigne ramenée au vilebrequin du moteur thermique et pouvant ainsi être utilisée est de l'ordre de 700 tr/min.

En variante, la vitesse du moteur électrique peut être régulée à l'aide d'une ou plusieurs valeurs de consigne qui, lorsqu'elles sont ramenées au vilebrequin du moteur thermique, sont inférieures, voire très inférieures, aux valeurs de consigne ramenées au vilebrequin du moteur thermique et utilisées pour la régulation de la vitesse d'un moteur thermique lors d'un ralenti, notamment d'un ralenti entraîné. Une valeur de consigne ramenée au vilebrequin du moteur thermique et pouvant ainsi être utilisée est de l'ordre de 400 ou 500 tr/min.

Préalablement à la détection de l'absence d'accélération du véhicule, le moteur thermique du véhicule peut être utilisé pour entraîner le véhicule, avec ou sans le moteur électrique, et, une fois l'absence d'accélération détectée, le moteur thermique peut être coupé.

Lors d'une étape ultérieure, il peut être détecté que le véhicule est sollicité en accélération et/ou que l'unité de stockage d'énergie électrique alimentant le moteur électrique présente un niveau de charge insuffisant. Dans chacun de ces cas, le moteur thermique peut être démarré ou redémarré.

Le procédé de gestion peut être mis en oeuvre dans l'une quelconque des architectures de chaîne de traction mentionnées en rapport avec le procédé de démarrage de véhicule.

Lors de la mise en oeuvre du procédé de gestion ci-dessus, la sollicitation du moteur électrique peut être adaptée, notamment en temps réel, au niveau de charge de cette unité de stockage d'énergie électrique. Par exemple, lorsque le procédé est initié à l'aide du seul moteur électrique, le moteur thermique peut être démarré s'il s'avère que l'unité de stockage d'énergie électrique n'est pas suffisamment chargée pour assurer le ralenti du véhicule à l'aide du seul moteur électrique.

Dans le cas d'une régulation de la vitesse par paliers, lorsque la vitesse est régulée à l'aide de la première valeur de consigne, il peut être déterminé que le niveau de charge de l'unité de stockage d'énergie électrique est inférieur à une valeur donnée. Dans ce cas, un passage à une régulation à l'aide de la deuxième valeur de consigne supérieure à la première valeur de consigne peut se produire, puis le moteur thermique peut être démarré.

Indépendamment ou en combinaison avec ce qui précède, l'invention a encore pour objet, selon un autre de ses aspects, un procédé de coupure d'un moteur électrique d'un véhicule hybride comprenant en outre un moteur thermique, dans lequel:
- on compare la valeur d'une grandeur représentative de la vitesse du moteur électrique délivrée par un capteur avec une valeur seuil prédéfinie, et
- on coupe le moteur électrique lorsque la valeur délivrée par le capteur est inférieure à ladite valeur seuil.

Le procédé de coupure ci-dessus permet de protéger le groupe motopropulseur du véhicule. Lorsque le moteur électrique présente un sous-régime trop important par rapport à la consigne de vitesse qui lui est appliquée, la coupure du moteur électrique évite de le faire fonctionner à des vitesses trop basses qui ne lui permettront pas d'entraîner ultérieurement le véhicule.

Le procédé ci-dessus peut être mis en oeuvre lorsque l'on cherche à démarrer le véhicule. Le procédé peut comporter une étape préliminaire selon laquelle on reçoit un ordre de démarrer le véhicule et selon laquelle on démarre le moteur électrique du véhicule.

Ce procédé de coupure peut encore être qualifié de « procédé de commande d'un moteur électrique d'un véhicule hybride ».

Ce procédé peut être mis en oeuvre alors que le moteur thermique n'est pas sollicité.

Ce procédé peut être mis en oeuvre avant que le véhicule n'ait démarré, c'est-à-dire que la coupure du moteur électrique peut intervenir avant que le moteur électrique n'ait été directement ou indirectement accouplé aux roues motrices du véhicule.

La valeur seuil, ramenée au vilebrequin du moteur thermique, est par exemple de 100 tr/min à 200 tr/min inférieure à la valeur de consigne, ramenée au vilebrequin du moteur thermique. La valeur de la vitesse du moteur électrique fournie par le capteur peut être ramenée au vilebrequin du moteur thermique pour être comparée à la valeur seuil.

Le procédé de coupure peut être mis en oeuvre dans l'une quelconque des architectures de chaîne de traction mentionnées en rapport avec le procédé de démarrage de véhicule ci-dessus.

Indépendamment ou en combinaison avec ce qui précède, l'invention a encore pour objet, selon un autre de ses aspects, un procédé de commande d'un véhicule hybride comprenant un moteur thermique et un moteur électrique, dans lequel :
- on compare la valeur d'une grandeur représentative de la vitesse du moteur thermique délivrée par un capteur à une valeur seuil prédéfinie;
- lorsque la valeur délivrée par le capteur est inférieure à ladite valeur seuil, on commande le moteur électrique de manière à ce que celui-ci fournisse un couple permettant d'augmenter la vitesse du moteur thermique.

Le procédé de commande ci-dessus permet d'éviter de faire caler le moteur thermique en le faisant assister par le moteur électrique.

Lorsque l'on compare la vitesse du moteur thermique à la valeur seuil, le moteur électrique peut être coupé, auquel cas lorsque la valeur délivrée par le capteur est inférieure à la valeur seuil, on démarre le moteur électrique.

En variante, lorsque l'on compare la vitesse du moteur thermique à la valeur seuil, le moteur électrique peut déjà être utilisé, auquel cas lorsque la valeur délivrée par le capteur est inférieure à la valeur seuil, on augmente la part du moteur électrique.

La valeur seuil, ramenée au vilebrequin du moteur thermique, est par exemple de 100 tr/min à 200 tr/min inférieure à la valeur de consigne appliquée au moteur thermique, cette valeur étant ramenée au vilebrequin du moteur thermique.

Le procédé de coupure peut être mis en oeuvre dans l'une quelconque des architectures de chaîne de traction mentionnées en rapport avec le procédé de démarrage de véhicule ci-dessus.

Le moteur électrique peut être commandé de manière à permettre à la vitesse du moteur thermique d'être sensiblement égale à la valeur de consigne qui lui est appliquée.

Dans tout ce qui précède, l'architecture peut être dépourvue de convertisseur de couple.

Dans tout ce qui précède, l'architecture peut ne comprendre qu'un seul moteur thermique pour la propulsion du véhicule.

Dans tout ce qui précède, l'architecture peut ne comprendre qu'un seul moteur électrique pour la propulsion du véhicule.

L'architecture est par exemple dépourvue de convertisseur de couple, et elle comprend un unique moteur électrique pour la propulsion du véhicule et un unique moteur thermique pour la propulsion du véhicule.

L'invention pourra être mieux comprise à la lecture de la description qui va suivre d'exemples non limitatifs de mise en oeuvre de celle-ci et à l'examen du dessin annexé sur lequel :
- les figures 1 à 3 représentent différentes architectures de chaîne de traction dans lesquels les procédés selon l'invention peuvent être mis en oeuvre,
- la figure 4 représente de façon schématique plusieurs étapes lors du procédé de démarrage de véhicule hybride selon un exemple de mise en oeuvre de l'invention,
- la figure 5 représente les relevés de la vitesse du moteur électrique, de la vitesse du véhicule et du couple fourni par le moteur électrique lorsque le procédé représenté sur la figure 4 est mis en oeuvre,
- la figure 6 représente graphiquement plusieurs grandeurs lors d'une étape d'une variante du procédé de démarrage des figures 4 et 5,
- la figure 7 représente schématiquement un procédé de gestion de la vitesse d'un véhicule hybride selon un autre aspect de l'invention,
- la figure 8 représente schématiquement un procédé de coupure de moteur électrique de véhicule hybride selon un autre aspect de l'invention, et
- la figure 9 représente schématiquement un procédé de commande de moteur électrique de véhicule hybride selon un autre aspect de l'invention.

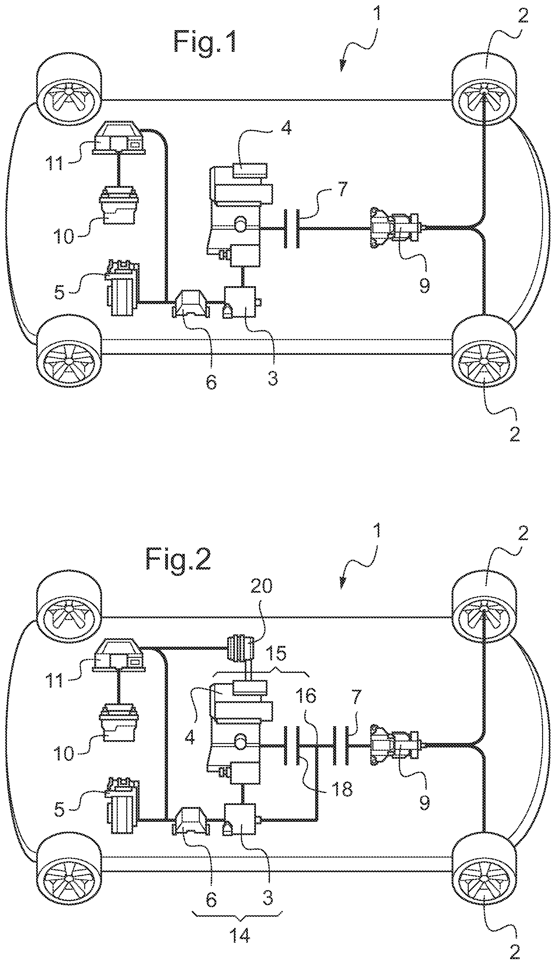

On a représenté aux figures 1 à 3 différentes architectures de chaîne de traction hybrides de véhicule au sein de laquelle peut être mis en oeuvre l'un quelconque des aspects de l'invention mentionnés ci-dessus.

La chaîne de traction hybride 1 du véhicule comprend dans les exemples des figures 1 à 3 deux roues motrices 2, un moteur électrique 3 et un moteur thermique 4. L'invention n'est cependant pas limitée à un nombre particulier de roues motrices. Le moteur électrique 3 est par exemple un moteur synchrone à aimants permanents. Il présente dans les exemples décrits une puissance nominale de l'ordre de 8 kW.

Le moteur thermique 4 est dans les exemples considérés un moteur à combustion interne, à essence, diesel ou utilisant des biocarburants.

Comme représentés sur les figures 1 à 3, la chaîne de traction 1 comprend encore une unité de stockage d'énergie électrique 5 alimentant le moteur électrique 3 à travers un onduleur 6. Cette unité de stockage d'énergie 5 est notamment formée par plusieurs batteries en série, en parallèle ou par plusieurs branches parallèles portant des batteries en série. Les batteries peuvent être des batteries lithium-ion ou lithium-polymère ou encore des supercapacités. La tension nominale aux bornes de l'unité de stockage d'énergie 5 est par exemple comprise entre 40 V et 400 V, étant notamment comprise entre 40 V et 60 V.

L'onduleur 6 peut être réversible, de manière à recharger l'unité de stockage d'énergie électrique 5 lors d'un freinage, par exemple. L'onduleur 6 comprend de façon connue une pluralité de cellules de commutation commandables.

Un connecteur non représenté permettant la charge de l'unité de stockage d'énergie électrique 5 par un réseau électrique peut être prévu.

La chaîne de traction 1 comporte encore un premier système d'embrayage 7 permettant d'accoupler avec les roues motrices 2 le moteur électrique 3 et, le cas échéant, le moteur thermique 4, comme on le verra par la suite. La chaîne de traction 1 comporte encore une boîte de vitesses 9.

Comme représenté sur les figures 1 à 3, le véhicule peut encore comprendre une source d'alimentation électrique 10 des composants de bord du véhicule, par exemple un auto-radio, un allume cigare, des rétroviseurs ou encore des phares du véhicule, un système de dégivrage ou un système de climatisation. Cette source d'alimentation électrique 10 peut être en tout ou partie alimentée par l'unité de stockage d'énergie 5 à travers un convertisseur de tension continue-continue 11. Ce convertisseur de tension 11 abaisse la tension fournie par l'unité de stockage d'énergie 5 à une valeur compatible avec l'alimentation des composants de bord, par exemple à une valeur de 12 V.

On va maintenant décrire plus précisément chacune des architectures de chaîne de traction 1. Dans l'architecture de la figure 1, le moteur électrique 3 est relié au vilebrequin du moteur thermique 4 par une courroie. Dans cet exemple, le premier système d'embrayage 7 est l'unique système d'embrayage de la chaîne de traction 1 et permet d'accoupler le moteur thermique 4 et le moteur électrique 3 à la boîte de vitesse 9 et ainsi aux roues motrices 2.

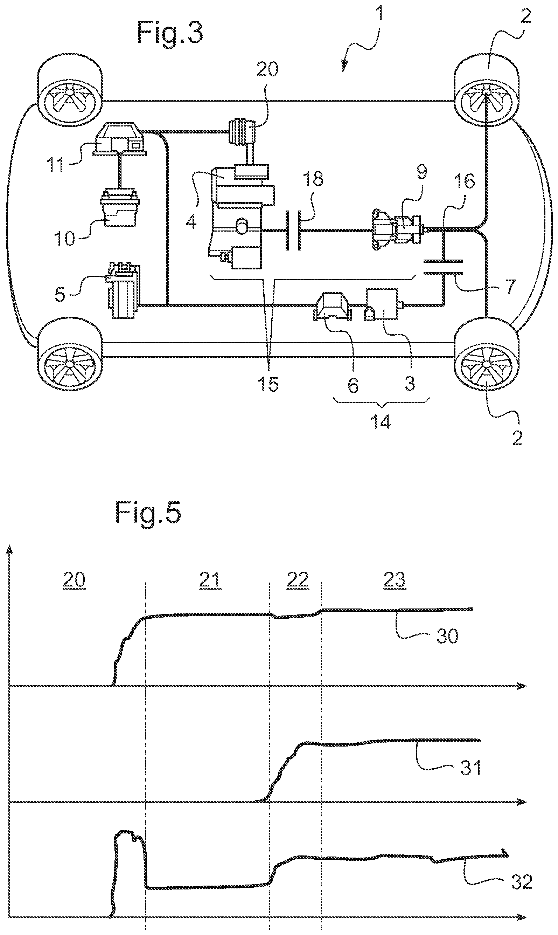

Dans l'exemple des figures 2 et 3, le moteur électrique 3 n'est pas relié au vilebrequin du moteur thermique 4, les moteurs 3 et 4 étant montés en parallèle dans la chaîne de traction. La chaîne de traction 1 comprend dans les exemples représentés sur ces figures 2 et 3 une branche 14 comprenant le moteur électrique 3 et une branche 15 comprenant le moteur thermique 4. Ces deux branches se rejoignent au niveau d'un embranchement 16.

Dans l'exemple de la figure 2, la branche 14 ne comprend que le moteur électrique 3 et l'onduleur 6. Le premier système d'embrayage 7 est interposé entre la boîte de vitesses 9 et l'embranchement 16.

La branche 15 comprend dans cet exemple un deuxième système d'embrayage 18 et le moteur thermique 4, le deuxième système d'embrayage 18 étant disposé entre l'embranchement 16 et le moteur thermique 4. Dans l'exemple de la figure 2, un alterno-démarreur 20 est également présent, cet alterno-démarreur étant relié au convertisseur de tension continue-continue 11.

Dans l'exemple de la figure 2, le premier système d'embrayage 7 permet d'accoupler le moteur électrique 3 et, selon l'état du deuxième système d'embrayage 18, le moteur thermique 4, à la boîte de vitesses 9.

Dans l'exemple de la figure 3, la branche 14 comprend en plus du moteur électrique 3 et de l'onduleur 6 le premier système d'embrayage 7 tandis que la branche 15 comprend le moteur thermique 4, le deuxième système d'embrayage 18 et la boîte de vitesses 9. Dans cet exemple, chaque branche comprend un système d'embrayage et la boîte de vitesses 9 n'est pas interposée entre le moteur électrique 3 et les roues motrices 2.

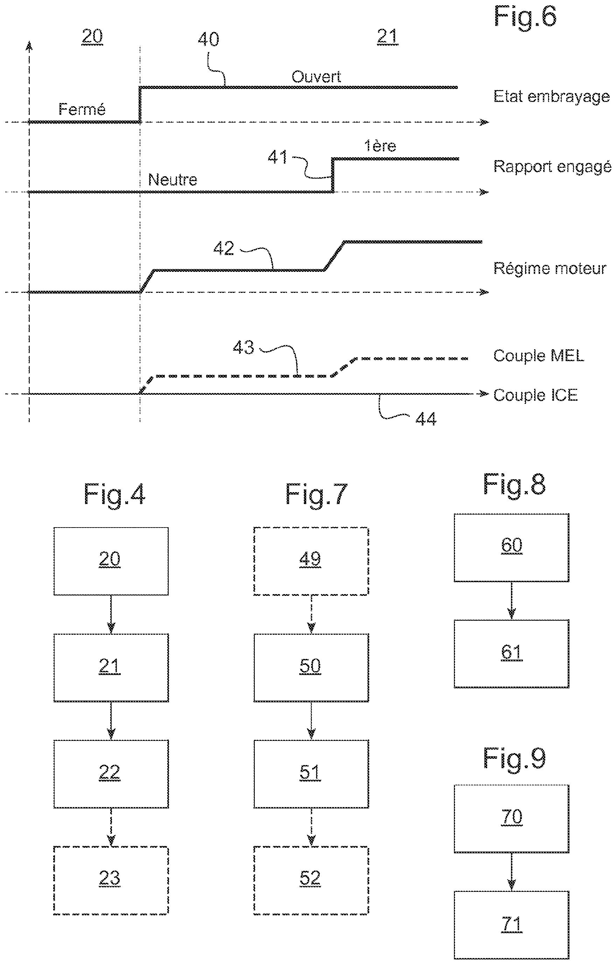

On va maintenant décrire en référence aux figures 4 à 6 un procédé de démarrage de l'un quelconque des véhicules hybrides dont la chaîne de traction 1 vient d'être décrite.

Comme représenté sur la figure 4, ce procédé comprend trois étapes 20, 21 et 22.

L'étape 20 correspond au démarrage du moteur électrique 3 de la chaîne de traction 1.

L'étape 21 correspond à une régulation de la vitesse du moteur électrique autour d'une valeur de consigne avant que le premier système d'embrayage 7 n'accouple le moteur électrique 3 et, le cas échéant le moteur thermique 4, aux roues motrices 2. Cette étape 21 est communément appelée « étape de ralenti ».

L'étape 22 consiste à accoupler à l'aide du premier système d'embrayage 7 le moteur électrique 3, le cas échéant avec le moteur thermique 4, et les roues motrices 2 du véhicule, de manière à ce que le moteur électrique 3, et le cas échéant le moteur thermique 4, entraîne le véhicule. L'étape 22 est communément appelée « étape de patinage ».

Lors d'une étape ultérieure 23, le véhicule est entraîné en tout ou partie par le moteur électrique 3, après avoir démarré.

Dans l'exemple qui va être décrit, le démarrage ou décollage du véhicule est effectué uniquement à l'aide du moteur électrique 3 mais l'invention n'est pas limitée à un tel exemple, le démarrage ou décollage du véhicule pouvant être effectué en utilisant à la fois le moteur électrique 3 et le moteur thermique 4.

La figure 5 montre l'évolution lors des étapes 20 à 23 de la vitesse du moteur électrique 3 selon la courbe 30, de la vitesse du véhicule selon la courbe 31 et du couple fourni par le moteur électrique 3 selon la courbe 32.

L'étape 20 peut être déclenchée par une action de l'utilisateur du véhicule sur la clef de contact ou tout autre système de démarrage du moteur électrique 3. En variante, cette étape est par exemple initiée par un appui sur la pédale d'embrayage de l'utilisateur.

Lors de cette étape 20, la vitesse du moteur électrique croît jusqu'à atteindre une valeur qui reste sensiblement constante lors de l'étape 21 qui correspond à une étape de régulation de la vitesse du moteur électrique 3. Cette régulation est par exemple réalisée par un asservissement effectué par un calculateur de supervision ou par l'unité de contrôle moteur du véhicule. En variante, cet asservissement peut être réalisé par l'électronique de commande du moteur électrique, cette dernière recevant de l'utilisateur ou d'une autre unité du véhicule une consigne de vitesse à appliquer.

La valeur de consigne autour de laquelle est régulée la vitesse du moteur électrique 3 lors de l'étape 21 peut permettre l'entraînement par le moteur électrique 3 du véhicule lorsque le moteur électrique 3 est accouplé par le système d'embrayage 7 aux roues motrices 2. Lorsque la boîte de vitesses 9 est interposée entre le système d'embrayage 7 et les roues motrices 2, ce démarrage nécessite qu'un rapport de la boîte de vitesses 9 soit engagé.

Dans l'exemple représenté à la figure 5, lors de l'étape 21, la vitesse du moteur électrique 3 n'est régulée qu'autour d'une seule valeur de consigne. Comme on peut le voir sur la courbe 32, le couple fourni par le moteur électrique 3 ne prend lors de cette étape 21 qu'une seule valeur sensiblement constante. Cette valeur étant inférieure à la valeur maximale de couple atteinte lors de l'étape 20 de démarrage du moteur électrique 3 et à celle qui sera atteinte lors de l'étape 22 pour entraîner le véhicule.

La valeur de consigne utilisée pour la régulation de la vitesse du moteur électrique 3 effectuée lors de cette étape 21 et ramenée au vilebrequin du moteur thermique 4 est par exemple comprise entre 400 et 700 tr/min, pouvant ou non être inférieure à la valeur de consigne (ramenée au vilebrequin) utilisée pour la régulation de la vitesse d'un moteur thermique lors de l'étape de ralenti au cours d'un démarrage exclusivement thermique d'un véhicule.

La figure 6 représente les étapes 20 et 21 d'un autre exemple de procédé de démarrage de véhicule hybride. Sur cette figure :
- la courbe 40 représente l'état du système d'embrayage 7 par lequel le moteur électrique 3 est sélectivement accouplé, le cas échéant via la boîte de vitesses 9, aux roues motrices 2,
- la courbe 41 traduit l'engagement ou non d'un rapport de la boîte de vitesses 9,
- la courbe 42 représente la vitesse du moteur électrique 3,
- la courbe 43 représente le couple fourni par le moteur électrique 3, et
- la courbe 44 représente le couple fourni par le moteur thermique 4.

Dans cet exemple, la vitesse du moteur électrique 3 est successivement régulée autour de deux valeurs de consigne différentes, la première valeur de consigne étant inférieure à la deuxième valeur de consigne. La première valeur de consigne, ramenée au vilebrequin du moteur thermique 4, est par exemple comprise entre 400 et 500 tr/min tandis que la deuxième valeur de consigne, ramenée au vilebrequin du moteur thermique 4, est comprise entre 600 et 700 tr/min.

La première valeur de consigne est par exemple adaptée au cas où aucun rapport de la boîte de vitesses 9 n'est engagé et où le système d'embrayage 7 n'accouple pas le moteur électrique 3 et les roues motrices 2, comme on peut le voir en observant les courbes 40 et 41.

La deuxième valeur de consigne est par exemple adaptée au cas où la première vitesse est engagée et où le système d'embrayage 7 n'accouple pas le moteur électrique 3 et les roues motrices 2.

Comme représenté sur la figure 6, seul le moteur électrique 3 est utilisé lors de cet exemple de démarrage, le couple fourni par le moteur thermique étant nul. Dans cet exemple, le couple fourni par le moteur électrique et la vitesse de ce moteur électrique augmentent par paliers lors de l'étape 21 de ralenti.

Lors de l'étape 22 de patinage non représentée sur la figure 6, le système d'embrayage 7 est commandé pour accoupler le moteur électrique 3 et les roues motrices 2, de manière à entraîner le véhicule.

Lors de l'étape 23 de patinage faisant suite à l'étape de régulation de la vitesse du moteur électrique autour d'une valeur de consigne ou plusieurs valeurs de consigne successives, le couple fourni par le moteur électrique 3 et/ou sa vitesse, peuvent être contrôlés en fonction de consignes appliquées en temps réel par l'utilisateur du véhicule. Le contrôle du couple fourni par le moteur électrique 3 et/ou de sa vitesse peut en variante être effectué par un programme, par exemple exécuté par l'unité de contrôle moteur du véhicule. Cette régulation est par exemple effectuée en activant une structure couple.

Le contrôle du couple fourni par le véhicule et/ou de la vitesse du moteur électrique tel que décrit lors de l'étape 23 de patinage peut également avoir lieu lors de l'étape 24.

On va maintenant décrire en référence à la figure 7 un procédé de gestion de la vitesse d'un véhicule hybride ayant une architecture de chaîne de traction représentée sur l'une quelconque des figures 1 à 3.

Ce procédé permet de gérer la vitesse du véhicule lors d'une phase de ralenti, cette phase de ralenti pouvant correspondre à l'étape 21 décrite ci-dessus ou à ce qui est communément appelé « ralenti entraîné », c'est-à-dire une phase lors de laquelle le véhicule se déplace mais aucune consigne d'accélération n'est exercée.

Les étapes 50 et 51 se rapportent à un exemple traitant spécifiquement de la gestion de la vitesse du moteur électrique 3 lors d'un ralenti entraîné. L'étape 50 consiste à détecter que le véhicule n'est pas sollicité en accélération, par exemple par surveillance de la position de la pédale d'accélération du véhicule, et l'étape 51 consiste à maintenir, en utilisant uniquement le moteur électrique, la vitesse du véhicule autour d'une valeur de consigne. Lors de cette étape 51, une régulation de la vitesse par paliers ou non, similairement à ce qui a été décrit en référence aux figures 4 à 6, peut être mise en oeuvre.

La vitesse du moteur électrique 3 peut être régulée à l'aide d'une ou plusieurs valeurs de consigne du même ordre de grandeur que la valeur de consigne utilisée pour la régulation de la vitesse d'un moteur thermique lors d'un ralenti entraîné. En variante, la vitesse du moteur électrique peut être régulée à l'aide d'une ou plusieurs valeurs de consigne inférieures, voire très inférieures, à la valeur de consigne utilisée pour la régulation de la vitesse d'un moteur thermique lors d'un ralenti entraîné.

Le procédé décrit en référence à la figure 7 peut comporter l'étape préalable 49 selon laquelle le moteur thermique 4 du véhicule est utilisé pour entraîner le véhicule, avec ou sans le moteur électrique 3. Le moteur thermique 4 est alors coupé à l'issue de l'étape 50, de manière à ce que seul le moteur électrique assure la phase de ralenti entraîné. Le cas échéant, à l'issue de cette étape 50, le moteur électrique 3 peut être démarré lorsque la traction du véhicule était auparavant exclusivement thermique.

Le procédé peut également comporter une étape 52 lors de laquelle on détecte qu'une consigne d'accélération est exercée et lors de laquelle le moteur thermique 4 est à nouveau utilisé.

On va maintenant décrire, en référence à la figure 8, un autre aspect de l'invention. Cette figure 8 représente de façon schématique un procédé de coupure d'un moteur électrique d'une chaîne de traction ayant l'une quelconque des architectures représentées aux figures 1 à 3.

Le procédé comprend dans l'exemple représenté deux étapes 60 et 61.

Lors de l'étape 60, on compare la valeur d'une grandeur représentative de la vitesse du moteur électrique 3 délivrée par un capteur avec une valeur seuil prédéfinie.

Lors de l'étape 61, on coupe le moteur électrique 3 lorsque la valeur délivrée par le capteur est inférieure à ladite valeur seuil.

Le procédé est par exemple mis en oeuvre à l'aide d'une unité de traitement numérique comportant un microcontrôleur.

La valeur seuil prédéfinie intervenant aux étapes 60 et 61 est par exemple choisie de manière à s'assurer que la coupure du moteur électrique intervient lorsque le moteur électrique 3 présente un sous-régime trop important. La vitesse du moteur électrique, ramenée au vilebrequin du moteur thermique 4, est par exemple inférieure de 100 tr/min à 200 tr/min à la valeur de consigne, ramenée au vilebrequin du moteur thermique, qui est appliquée au moteur électrique 3.

Par exemple, lorsque l'on souhaite démarrer le véhicule sans désaccoupler le moteur électrique 3 des roues motrices 2, on régule la vitesse du moteur électrique 3 autour d'une valeur de consigne ou de plusieurs valeurs de consignes successives. Si la valeur délivrée par le capteur est inférieure à la valeur seuil, le moteur électrique 3 est coupé car il ne permettra pas de faire démarrer le véhicule. Il est inutile de le faire fonctionner plus longtemps.

On va maintenant décrire, en référence à la figure 9, un autre aspect de l'invention. Cette figure 9 représente de façon schématique un procédé de commande d'un moteur électrique 3 d'une chaîne de traction 1 ayant l'une quelconque des architectures représentées aux figures 1 à 3.

Ce procédé comprend dans l'exemple considéré deux étapes 70 et 71.

Lors de l'étape 70, on compare la valeur d'une grandeur représentative de la vitesse du moteur thermique 4 délivrée par un capteur à une valeur seuil prédéfinie.

Lors de l'étape 71, lorsque la valeur délivrée par le capteur est inférieure à ladite valeur seuil, on commande le moteur électrique 3 de manière à ce que celui-ci fournisse un couple permettant d'augmenter la vitesse du moteur thermique.

La valeur seuil est par exemple inférieure de 100 tr/min à 200 tr/min à la valeur de consigne appliquée au moteur thermique 4, lesdites valeurs étant ramenées au vilebrequin du moteur thermique.

Le procédé peut être mis en oeuvre à l'aide d'une unité de traitement numérique comportant un microcontrôleur et le capteur peut être de même type ou non que celui pouvant être utilisé lors de la mise en oeuvre du procédé décrit en référence à la figure 8.

## Revendications

1. Procédé de coupure d'un moteur électrique (3) d'un véhicule hybride comprenant en outre un moteur thermique (4), le procédé étant mis en oeuvre lorsque l'on cherche à démarrer le véhicule, et comprenant les étapes selon lesquelles:
- on compare la valeur d'une grandeur représentative de la vitesse du moteur électrique (3) délivrée par un capteur avec une valeur seuil prédéfinie, et **caractérisé en ce que** l'on coupe le moteur électrique (3) lorsque la valeur délivrée par le capteur est inférieure à ladite valeur seuil.

2. Procédé selon la revendication 1, dans lequel la valeur seuil, ramenée au vilebrequin du moteur thermique, est de 100 tr/min à 200 tr/min inférieure à la valeur de consigne, ramenée au vilebrequin du moteur thermique, appliquée au moteur électrique (3).

3. Procédé selon l'une des revendications précédentes, dans lequel le moteur électrique (3) est relié au vilebrequin du moteur thermique (4), le système d'embrayage (7) étant interposé entre le moteur thermique (4) et la boîte de vitesses (9).

4. Procédé selon la revendication 1 ou 2, dans lequel le moteur thermique (4) et le moteur électrique (3) sont montés en parallèle.

5. Procédé selon la revendication 4, ledit système d'embrayage (7) étant un premier système d'embrayage disposé de manière à accoupler sélectivement le moteur électrique (3) et le moteur thermique (4) avec la boîte de vitesse (9) et le véhicule comprenant un deuxième système d'embrayage (18) disposé entre le premier système d'embrayage (7) et le moteur thermique (4).

6. Procédé selon la revendication 4, ledit système d'embrayage (7) étant un premier système d'embrayage disposé de manière à accoupler sélectivement uniquement le moteur électrique (3) avec les roues motrices (2) et le véhicule comprenant un deuxième système d'embrayage (18) disposé de manière à accoupler sélectivement uniquement le moteur thermique (4) et la boîte de vitesses (9).

7. Procédé selon l'une quelconque des revendications précédentes, étant mis en oeuvre sans solliciter le moteur thermique.

8. Procédé selon l'une quelconque des revendications précédentes, étant mis en oeuvre avant que le véhicule n'ait démarré.

## Patentansprüche

1. Verfahren zum Abschalten eines Elektromotors (3) eines Hybrid-Fahrzeugs, das außerdem einen Wärmekraftmotor (4) enthält, wobei das Verfahren angewendet wird, wenn das Fahrzeug gestartet werden soll, und die Schritte enthält, gemäß denen:
- der Wert einer für die Geschwindigkeit des Elektromotors (3) repräsentativen Größe, der von einem Sensor geliefert wird, mit einem vordefinierten Schwellwert verglichen wird, und
**dadurch gekennzeichnet, dass** der Elektromotor (3) abgeschaltet wird, wenn der vom Sensor gelieferte Wert niedriger als der Schwellwert ist.

2. Verfahren nach Anspruch 1, wobei der Schwellwert, zurückgeführt auf die Kurbelwelle des Wärmekraftmotors, 100 U/min bis 200 U/min niedriger als der Sollwert, zurückgeführt auf die Kurbelwelle des Wärmekraftmotors, angewendet an den Elektromotor (3) ist.

3. Verfahren nach einem der vorhergehenden Ansprüche, wobei der Elektromotor (3) mit der Kurbelwelle des Wärmekraftmotors (4) verbunden ist, wobei das Kupplungssystem (7) zwischen den Wärmekraftmotor (4) und das Schaltgetriebe (9) eingefügt ist.

4. Verfahren nach Anspruch 1 oder 2, wobei der Wärmekraftmotor (4) und der Elektromotor (3) parallelgeschaltet sind.

5. Verfahren nach Anspruch 4, wobei das Kupplungssystem (7) ein erstes Kupplungssystem ist, das so angeordnet ist, dass es selektiv den Elektromotor (3) und den Wärmekraftmotor (4) mit dem Schaltgetriebe (9) koppelt, und das Fahrzeug ein zweites Kupplungssystem (18) enthält, das zwischen dem ersten Kupplungssystem (7) und dem Wärmekraftmotor (4) angeordnet ist.

6. Verfahren nach Anspruch 4, wobei das erste Kupplungssystem (7) ein erstes Kupplungssystem ist, das so angeordnet ist, dass es selektiv nur den Elektromotor (3) mit den Antriebsrädern (2) koppelt, und das Fahrzeug ein zweites Kupplungssystem (18) enthält, das so angeordnet ist, dass es selektiv nur den Wärmekraftmotor (4) und das Schaltgetriebe (9) koppelt.

7. Verfahren nach einem der vorhergehenden Ansprüche, das angewendet wird, ohne den Wärmekraftmotor zu beaufschlagen.

8. Verfahren nach einem der vorhergehenden Ansprüche, das angewendet wird, ehe das Fahrzeug gestartet ist.

## Claims

1. Method for cutting off an electric motor (3) of a hybrid vehicle further comprising a heat engine (4), the method being implemented when seeking to start the vehicle and comprising the steps whereby:
- the value of a parameter representative of the speed of the electric motor (3) and delivered by a sensor is compared against a predefined threshold value, and
**characterized in that**
the electric motor (3) is cut off when the value delivered by the sensor is below the said threshold value.

2. Method according to Claim 1, in which the threshold value, in terms of the crankshaft of the heat engine, is 100 rpm to 200 rpm below the setpoint value, in terms of the crankshaft of the heat engine, applied to the electric motor (3).

3. Method according to one of the preceding claims, in which the electric motor (3) is connected to the crankshaft of the heat engine (4), the clutch system (7) being interposed between the heat engine (4) and the gearbox (6).

4. Method according to Claim 1 or 2, in which the heat engine (4) and the electric motor (3) are mounted in parallel.

5. Method according to Claim 4, the said clutch system (7) being a first clutch system arranged in such a way as to selectively couple the electric motor (3) and the heat engine (4) with the gearbox (9), and the vehicle comprising a second clutch system (18) arranged between the first clutch system (7) and the heat engine (4).

6. Method according to Claim 4, the said clutch system (7) being a first clutch system arranged in such a way as to selectively couple only the electric motor (3) with the driven wheels (2) and the vehicle comprising a second clutch system (18) arranged in such a way as to selectively couple only the heat engine (4) and the gearbox (9).

7. Method according to any one of the preceding claims, implemented without demand on the heat engine.

8. Method according to any one of the preceding claims, implemented before the vehicle has started.
